# EUROPÄISCHE PATENTSCHRIFT

(11) **EP 2 205 813 B1**
(45) Veröffentlichungstag und Bekanntmachung des Hinweises auf die Patenterteilung: **30.03.2011**
(21) Anmeldenummer: 08845208.1
(22) Anmeldetag: 31.10.2008
(51) Int. Cl.: E21B 7/20, E21B 7/26, E21B 47/10

(54) **VERFAHREN UND VORRICHTUNG ZUR ÜBERPRÜFUNG DER UMHÜLLUNG EINER ROHRLEITUNG WÄHREND DER VERLEGUNG IN EIN MIT FLÜSSIGKEIT GEFÜLLTES BOHRLOCH**
METHOD AND DEVICE FOR TESTING THE COATING OF A PIPELINE WHILE LAYING THE PIPELINE IN A LIQUID-FILLED BOREHOLE
PROCÉDÉ ET DISPOSITIF DE CONTRÔLE DE L'ENVELOPPE D'UNE CONDUITE TUBULAIRE PENDANT SA POSE DANS UN TROU DE FORAGE REMPLI DE LIQUIDE

(30) Priorität: 31.10.2007 DE 102007051956
(43) Veröffentlichungstag der Anmeldung: 14.07.2010
(73) Patentinhaber: Herrenknecht AG, 77963 Schwanau (DE)
(72) Erfinder: KÖGLER, Rüdiger, 26670 Nordgeorgsfehn (DE)
(74) Vertreter: Wetzel, Philipp
(86) Internationale Anmeldenummer: PCT/EP2008/009201
(87) Internationale Veröffentlichungsnummer: WO 2009/056329

(56) Entgegenhaltungen:
- DE-A1- 19 808 478
- DE-C1- 3 808 322
- US-A- 2 925 251
- US-A- 3 648 282

## Beschreibung

Die vorliegende Erfindung betrifft ein Verfahren zur Überprüfung der Umhüllung einer Rohrleitung während der Verlegung in ein mit Flüssigkeit gefülltes Bohrloch in einem Boden, wobei eine Vorschubeinrichtung eine Druckkraft über eine Rohrleitung auf einen Bohrkopf ausübt und eine dabei einsetzbare Vorrichtung zur Überprüfung der Umhüllung einer Rohrleitung während der Verlegung in ein mit Flüssigkeit gefülltes Bohrloch in einem Boden (12) über einen Bohrkopf, mit einer Vorschubeinrichtung, wobei die Vorschubeinrichtung eine Druckkraft über eine Rohrleitung auf den Bohrkopf ausübt, mit einer elektrisch nicht leitfähigen Isolationskupplung, die zwischen der Rohrleitung und dem Bohrkopf angeordnet ist, so dass die Druckkraft der Vorschubvorrichtung über die Rohrleitung und die elektrisch nicht leitfähige Isolationskupplung auf den Bohrkopf übertragbar ist, und mit Steuer- und Versorgungsleitungen für den Bohrkopf, die innerhalb der Rohrleitung angeordnet sind und eine Isolationskupplung zum Übertragen einer von einer Vorschubeinrichtung erzeugten Druckkraft zum Einschub einer Rohrleitung in ein mit einer Flüssigkeit gefülltes Bohrloch, wobei die Druckkraft von der Vorschubeinrichtung auf die Rohrleitung aufgebracht wird, auf einen Bohrkopf, wobei die Isolationskupplung ein Element zum Anschließen der Rohrleitung und eine Element zum Anschließen des Bohrkopfs aufweist, das Element zum Anschließen der Rohrleitung und das Element zum Anschließen des Bohrkopfs so miteinander verbunden sind, dass die Druckkraft vom Element zum Anschließen der Rohrleitung auf das Element zum Anschließen des Bohrkopfs übertragbar ist, die Verbindung elektrisch nicht leitfähig ausgeführt ist, und Steuer- und Versorgungsleitungen für den Bohrkopf innerhalb der Isolationskupplung so angeordnet sind, dass die Steuer- und Versorgungsleitungen keinen elektrischen Kontakt zwischen Bohrkopf und Boden mit der Rohrleitung bewirken..

### Stand der Technik

Für die grabenlose Verlegung von Rohrleitungen sind verschiedene Bauweise und Techniken geeignet, z.B. die gesteuerte Horizontalbohrtechnik (HDD = Horizontal Directional Drilling) oder der gesteuerte Rohrvortrieb (Microtunneling). Solche Verfahren in Kombination sind in DE 198 08 478 A1 gezeigt. Hier wird eine Rohrleitung in ein mit einer Flüssigkeit gefülltes Bohrloch eingebracht. Daneben wurden in jüngster Zeit weitere Techniken entwickelt und erprobt, so z.B. das so genannte Direct Pipe (DP)-Verfahren. Bei der letztgenannten Arbeitsweise wird ein vorgefertigter Rohrstrang von einer Vorschubeinrichtung in den Boden geschoben, wobei die Bohrlocherstellung von einem an der Vorderseite des Rohrstrangs angebrachten Bohrkopf erfolgt. Dieses Verfahren ist im Detail in der Patentanmeldung DE 10 2006 020 339.9 beschrieben.

Während des Verlegevorgangs kann es dabei zu Beschädigungen der Korrosionsschutzumhüllung der Rohrleitung kommen, wenn z.B. scharfkantige Steine oder andere Hindernisse diese durch Druck oder Scherung zerstören. Falls eine solche Beschädigung stattgefunden hat, kann die Rohrleitung mitunter durch zusätzliche Maßnahmen (Stichwort: aktiver Korrosionsschutz) ausreichend gegen Korrosion geschützt werden, wenn die Beschädigungen nicht zu groß sind. Bei großen Beschädigungen kann es jedoch erforderlich werden, die Rohrleitung noch einmal aus dem Bohrloch zu entfernen, um die schadhaften Stellen reparieren zu können. Dieser Rückzug der Rohrleitung gelingt in der Regel nur, wenn er unmittelbar nach dem Einziehvorgang erfolgt, da ansonsten die Rohrleitung im Boden einsedimentiert und nicht mehr bewegt werden kann. In jedem Fall sind solche Havariemaßnahmen mit erheblichem Zeit- und Kostenaufwand verbunden.

Ob eine solche Beschädigung der Korrosionsschutzumhüllung während des Einziehvorgangs aufgetreten ist oder nicht, lässt sich bisher erst nach Abschluss des Verlegevorgangs feststellen, indem entsprechende Messungen (Stichwort: Probeeinspeisung) durchgeführt werden, mit deren Hilfe die Polarisierbarkeit des Stahls und damit der Zustand der Umhüllung bestimmt werden kann.

Prinzipiell erfolgen solche Messungen, indem die Rohrleitung an beiden Enden freigelegt und gesäubert wird, so dass der Rohrstahl keine elektrisch leitfähige Verbindung zum Boden aufweist (z.B. über die Bohrflüssigkeit). Zur Feststellung der Polarisierbarkeit wird sodann der Minuspol einer Gleichspannungsquelle an die zu überprüfende Rohrleitung und der Pluspol an einen provisorischen Erder angeschlossen. Durch Ein- und Ausschalten des Stroms in bestimmten zeitlichen Intervallen sowie Messung der zugehörigen Ein- und Ausschaltpotentiale lässt sich auf den Zustand der Rohrumhüllung schließen. Ein solches Verfahren ist in DE 38 08 322 C1 offenbart. Dabei wird an einem elektrisch getrennten Rohrleitungsabschnitt das Potential zwischen Rohrleitung und der Erdoberfläche gemessen. Dieses Verfahren lässt sich nicht während des Bohrverfahrens anwenden, da der mit der Rohrleitung verbundene Bohrkopf eine direkte elektrische Verbindung zwischen Rohrleitung und Boden ermöglicht. US3,648,282 Offenbart ein Messverfahren während des Verlegens eines Kabels mit einem Verlegepflug, allerdings ist hier durch die Verlegemethode und die Ummantelung des Kabels eine elektrische Trennung zwischen Kabellitze und Boden gegeben. Aus US 2,925,251 ist eine Isolierkupplung zum Übertragen einer Druckkraft beim Abteufen einer Vertikalbohrung bekannt bei der es sich um eine Trennschicht handelt. Diese Isolierkupplung weist die Merkmale des Oberbegriffs des Anspruchs 7 auf.

Diese Messungen sind bisher nur nach der Verlegung möglich, da ansonsten ein am Rohrleitungsende eingespeister Strom direkt durch die metallischen Verbindungen am Bohrkopf wieder in den Boden fließen würde und dieser Stromfluß somit keinerlei Informationen zum Zustand der Rohrumhüllung liefern könnte.

### Technische Aufgabe

Der vorliegenden Erfindung liegt die Aufgabe zugrunde, derartige Messungen bereits während des Verlegevorgangs zu ermöglichen, um im Falle einer Beschädigung der Umhüllung den Einziehvorgang zeitnah zum Schadeneintritt unterbrechen zu können und die Rohrleitung wieder aus dem Bohrloch zurückzuziehen. Dadurch, dass dieser Rückziehvorgang zu einem früheren Zeitpunkt als bisher erfolgen kann, werden die wirtschaftlichen Folgen einer solchen Havarie gemindert und das technische Risiko, die Rohrleitung eventuell wegen eines Einsedimentierens gar nicht mehr bergen zu können, wird reduziert.

### Lösung der technischen Aufgabe

Die technische Aufgabe wird gelöst, indem die Rohrleitung über eine Isolationskupplung mit dem Bohrkopf verbunden wird und gleichzeitig die im Inneren der Rohrleitung verlaufenden Ver- und Entsorgungs- sowie Steuerleitungen des Bohrkopfes gegenüber der Rohrleitung isoliert sind, wobei die Isolationskupplung zwar Zug- und Druckkräfte übertragen kann, elektrisch jedoch nicht leitfähig ist. Durch diese Maßnahmen und Vorrichtungen lassen sich während des Einziehvorgangs Probeeinspeisungen vornehmen, die tatsächlich Rückschlüsse über den Zustand der Umhüllung der Rohrleitung zulassen.

### Vorteile der Erfindung

Die wesentlichen Vorteile gegenüber der bisherigen Arbeitsweise sind:
- Zeitnahe Feststellung einer Beschädigung der Umhüllung während des Einziehvorgangs.
- Reduzierung des technischen Risikos (Festwerden der Rohrleitung).
- Reduzierung der mit der Reparatur einhergehenden Kosten.
- Einfache und damit kostengünstige Bauweise der Isolationskupplung.
- Keine oder nur sehr geringe Anpassung der Arbeitsweise für den Verlegevorgang erforderlich.

Hinsichtlich des Verfahrens wird die erfindungsgemäße Aufgabe dadurch gelöst, dass die Druckkraft über eine elektrisch nicht leitfähige Isolationskupplung von der Rohrleitung auf den Bohrkopf übertragen wird, dass Steuer- und Versorgungsleitungen für den Bohrkopf innerhalb der Rohrleitung so angeordnet werden, dass zwischen den Steuer- und Versorgungsleitungen kein elektrischer Kontakt zwischen Bohrkopf und Boden mit der Rohrleitung entsteht und dass während des Verlegevorgangs der Rohrleitung die Unversehrtheit der im Bohrloch von einer Flüssigkeit umgebenen Umhüllung der Rohrleitung von einer Messvorrichtung überprüft wird. Auf diese Art wird es einfach möglich während des Einschiebens die Überprüfung vorzunehmen.

Vorteilhaft ist dabei, dass sich die Messapparatur außerhalb des Bohrlochs befindet und/oder dass die Messvorrichtung mobil angeordnet ist und/oder während des Einzugs der Rohrleitung im Wesentlichen simultan mit der Rohrleitung bewegt wird.

Eine weitere Lehre der Erfindung sieht vor, dass die Rohrleitung außerhalb des Bohrlochs auf Rollenböcken gelagert wird, und/oder dass ein Ende der Rohrleitung elektrisch vom Boden und/oder dem mit der Flüssigkeit gefüllten Bohrloch getrennt wird.

Weiterhin ist vorteilhaft, dass die Überprüfung elektrisch durchgeführt wird.

Eine weitere Lehre der Erfindung sieht vor, dass die Druck- oder Zugkraft der Vorschubeinrichtung über Stege an einem Innenrohr der Isolationskupplung auf ein druckfestes, jedoch elektrisch nicht leitfähiges Material eingeleitet werden und von diesem druckfesten, jedoch elektrisch nicht leitfähigen Material auf Stege an einem Außenrohr der Isolationskupplung und von dort über das Außenrohr der Isolationskupplung weiter auf den Bohrkopf übertragen werden und dass die Stege des Innenrohrs der Isolationskupplung keine elektrisch leitfähige Verbindung zum Außenrohr der Isolationskupplung und die Stege am Außenrohr der Isolationskupplung keine elektrisch leitfähige Verbindung zum Innenrohr der Isolationskupplung aufweisen.

Weiterhin ist vorteilhaft, dass als druckfestes, jedoch elektrisch nicht leitfähiges Material Beton und/oder einen Kunststoff eingesetzt wird, mit dem die Druck- oder Zugkraft der Vorschubeinrichtung auf den Bohrkopf übertragen wird. Durch diese Materialien lässt sich eine einfache, gut isolierte und kostengünstige Isolationskupplung bereitstellen.

Weiterhin wird die erfindungsgemäße Aufgabe durch eine Isolationskupplung gelöst , dass das Element zum Anschließen der Rohrleitung wenigstens einen Steg aufweist, und das Element zum Anschließen des Bohrkopfs wenigstens einen Steg aufweist, dass die elektrisch nicht leitfähige Verbindung über ein elektrisch nicht leitfähiges Material erfolgt, das druck- und zugfest ist, wobei das elektrisch nicht leitfähiges Material zwischen den Stegen Druckkraft übertragend wirkend angeordnet ist, und dass der wenigstens eine Steg des Elements zum Anschließen der Rohrleitung keine elektrisch leitfähige Verbindung zum Element zum Anschließen des Bohrkopfs und der wenigstens eine Steg am Element zum Anschließen des Bohrkopfs keine elektrisch leitfähige Verbindung zum Element zum Anschließen der Rohrleitung aufweist.

Bei einer solchen Isolationskupplung ist erfindungsgemäß vorteilhaft, wenn das Element zum Anschließen der Rohrleitung ein Innenrohr oder ein Außenrohr ist, und/oder dass das Element zum Anschließen des Bohrkopfs ein Innenrohr oder ein Außenrohr ist. Weiterhin sieht eine vorteilhafte Ausführung der Erfindung vor, dass das Material Beton und/oder Kunststoff ist

Eine weitere Lehre der Erfindung sieht vor, dass ein Innenrohr vorgesehen ist, in dem die Steuer- und Versorgungsleitungen für den Bohrkopf angeordnet sind, wobei bevorzugt das Innenrohr mittels wenigstens einer Zentrierung in der Isolationskupplung angeordnet ist, wobei das Innenrohr und/oder die Zentrierungen besonders bevorzugt aus einem isolierenden Material bestehen. Auf diese Weise wird einfach sichergestellt, dass keine unfreiwillige leitende Verbindung beispielsweise durch Beschädigung der Steuer- und Versorgungsleitungen entstehen kann.

Weiterhin ist vorteilhaft, dass im Verbindungsbereich, bevorzugt innerhalb des Druckkraftübertragungsbereichs zwischen Innenrohr und Außenrohr, mindestens eine Leitung für die Zufuhr von Flüssigkeit in das Bohrloch zwischen Rohrleitung und Bohrlochwand so installiert ist, dass keine elektrische Verbindung vom Innenrohr zum Außenrohr besteht.

Weiterhin wird die technische Aufgabe hinsichtlich der Vorrichtung dadurch gelöst, dass die Isolationskupplung wie zuvor beschrieben ausgeführt ist, dass die Steuer- und Versorgungsleitungen für den Bohrkopf innerhalb der Rohrleitung so angeordnet sind, dass sie keinen elektrischen Kontakt zwischen Bohrkopf und Boden mit der Rohrleitung ermöglichen, und dass während des Verlegevorgangs der Rohrleitung eine Messapparatur vorgesehen ist, mit der die Unversehrtheit der im Bohrloch von der Flüssigkeit umgebenen Umhüllung der Rohrleitung überprüfbar ist.

### Zeichnungen

Das erfindungsgemäße Verfahren sowie dabei einsetzbare Vorrichtung werden anhand von Zeichnungen dargestellt und nachfolgend erläutert, wobei die dort gezeigten Merkmale beispielhaften Charakter aufweisen. Die Zeichnungen zeigen:
- Fig. 1:: Prinzipielle Darstellung des erfindungsgemäßen Verfahrens.
- Fig. 2:: Prinzipielle Anordnung der erfindungsgemäßen Vorrichtung.
- Fig. 3:: Beispielhafte Ausführungsform der erfindungsgemäßen Isolationskupplung.

### Ausführungsbeispiele

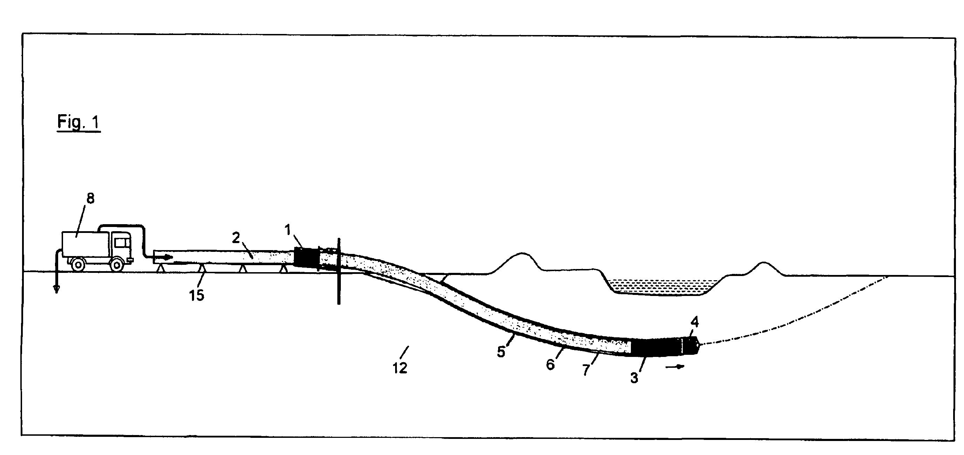

In Fig. 1 ist die prinzipielle Einsatzmöglichkeit des erfindungsgemäßen Verfahrens sowie dabei einsetzbaren Vorrichtungen gezeigt. Von einer Vorschubeinrichtung 1 wird eine mit Korrosionsschutzumhüllung 7 versehene Rohrleitung 2 in den Boden 12 geschoben, wobei das Bohrloch 5 von dem Bohrkopf 4 am vorderen Ende der Rohrleitung 2 erstellt wird. Der Ringraum zwischen der Umhüllung 7 und der Wand des Bohrlochs 5 ist mit einer (Bohr)-Flüssigkeit 6 gefüllt.

Die Rohrleitung 2 ist außerhalb des Bohrlochs auf Rollenböcken 15 gelagert. Das Ende der Rohrleitung 2 befindet sich in Luft und ist dadurch elektrisch vom Boden 12 bzw. dem mit Flüssigkeit 6 gefüllten Bohrloch 5 getrennt. Dadurch können von einer Messvorrichtung 8 am Ende der Rohrleitung 2 entsprechende Messungen zur Überprüfung der Rohrumhüllung 7 durchgeführt werden. In einem bevorzugten Anwendungsfall ist diese Messvorrichtung 8 mobil und bewegt sich während des Einziehvorgangs im Wesentlichen simultan mit der Rohrleitung 2.

Die Messvorrichtung 8 ist mit einem Erder und der Rohrleitung 2 verbunden. Zwischen dem Erder und der Rohrleitung 2 wird eine elektrische Messung durchgeführt. Dafür ist eine Spannungsquelle (nicht dargestellt) vorgesehen. Ist die Umhüllung 7 der Rohrleitung 2 beschädigt, dann kann dieses durch die elektrischen Messwerte nachgewiesen werden.

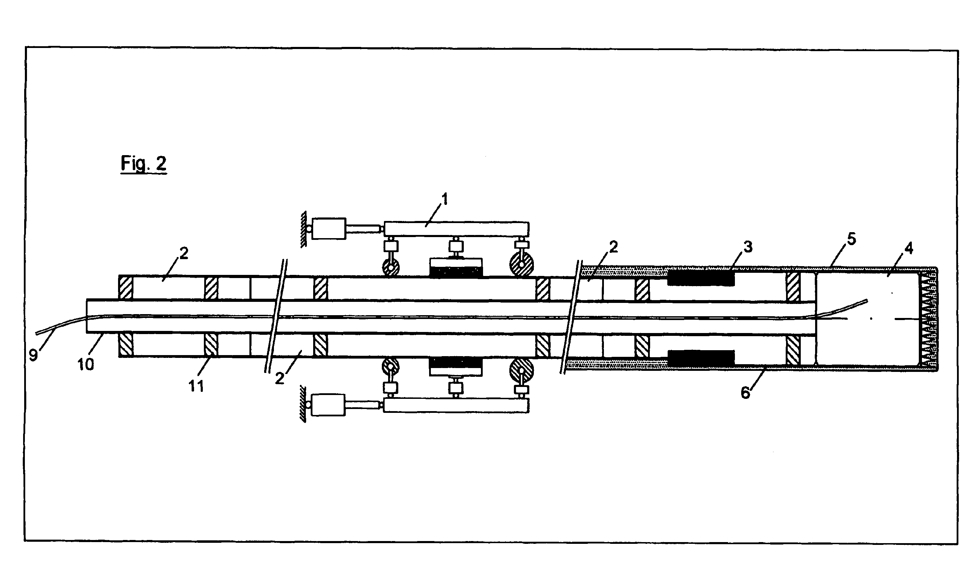

In Fig. 2 ist die prinzipielle Anordnung der erfindungsgemäßen Vorrichtung gezeigt. Die Schubkraft der Vorschubeinrichtung 1 wird über die Rohrleitung 2 und die Isolationskupplung 3 auf den Bohrkopf 4 übertragen. Innerhalb der Rohrleitung 2 verläuft in einer bevorzugten Ausführungsform ein mittels Zentrierungen 11 fixiertes Innenrohr 10, in dem die für den Betrieb und die Steuerung des Bohrkopfes 4 verlaufenden Kabel und Leitungen eingebracht sind. Die Zentrierungen 11 und/oder das Innenrohr 10 sind aus elektrisch nicht leitfähigem Material gefertigt.

Durch die elektrisch nicht leitfähige, Schub- und Zugkräfte übertragende Isolationskupplung 3 wird der Bohrkopf elektrisch von der Rohrleitung entkoppelt, so dass eine Beschädigung der Umhüllung 7 unmittelbar von der Messvorrichtung 8 festgestellt werden kann.

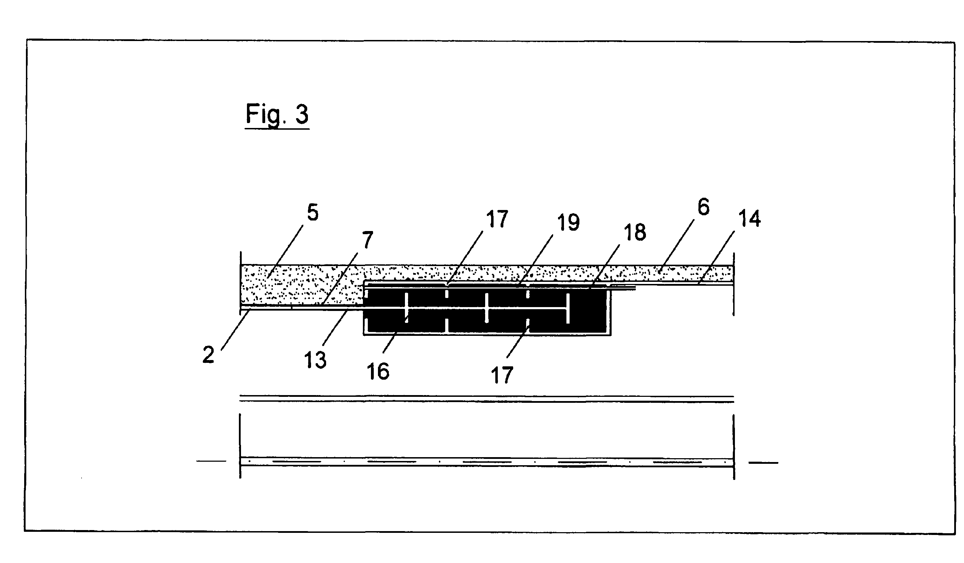

In Fig. 3 ist eine beispielhafte Ausführungsform der erfindungsgemäßen Vorrichtung gezeigt. Die Isolationskupplung 3 besteht dabei im Wesentlichen aus einem Innenrohr 13 und einem Außenrohr 14, welche über ein elektrisch nicht leitfähiges Material 18 verbunden sind, welches in einem bevorzugten Ausführungsfall sowohl Druck- als auch Zugkräfte übertragen kann.

Um eine effektivere Kraftübertragung zwischen Innenrohr 13 und Außenrohr 14 zu erreichen, können wechselseitig Stege 16 und 17 auf dem Innenrohr 13 bzw. Außenrohr 14 angebracht sein.

### Bezugszeichenliste

- 1: Vorschubeinrichtung
- 2: Rohrleitung
- 3: Isolationskupplung
- 4: Bohrkopf
- 5: Bohrloch
- 6: Flüssigkeit
- 7: Umhüllung
- 8: Messvorrichtung
- 9: Steuer- und Versorgungsleitungen
- 10: Innenrohr
- 11: Zentrierung
- 12: Boden
- 13: Innenrohr der Isolationskupplung
- 14: Außenrohr der Isolationskupplung
- 15: Rollenböcke
- 16: Stege am Innenrohr der Isolationskupplung
- 17: Stege am Außenrohr der Isolationskupplung
- 18: Druckfestes, elektrisch nicht leitfähiges Material
- 19: Leitung für Zufuhr von Flüssigkeit

## Patentansprüche

1. Verfahren zur Überprüfung der Umhüllung einer Rohrleitung (2) während der Verlegung in ein mit Flüssigkeit (6) gefülltes Bohrloch (5) in einem Boden (12), wobei eine Vorschubeinrichtung (1) eine Druckkraft über eine Rohrleitung (2) auf einen Bohrkopf (4) ausübt, **dadurch gekennzeichnet, dass** die Druckkraft über eine elektrisch nicht leitfähige Isolationskupplung (3) von der Rohrleitung (2) auf den Bohrkopf (4) übertragen wird, dass Steuer- und Versorgungsleitungen (9) für den Bohrkopf (4) innerhalb der Rohrleitung (2) so angeordnet werden, dass durch die Steuer- und Versorgungsleitungen (9) kein elektrischer Kontakt zwischen Bohrkopf (4) und Boden (12) mit der Rohrleitung (2) entsteht, und dass während des Verlegevorgangs der Rohrleitung (2) die Unversehrtheit der im Bohrloch (5) von einer Flüssigkeit (6) umgebenen Umhüllung (7) der Rohrleitung (2) von einer Messvorrichtung (8) überprüft wird.

2. Verfahren nach Anspruch 1, **dadurch gekennzeichnet, dass** sich die Messvorrichtung (8) außerhalb des Bohrlochs (5) befindet und/oder dass die Messvorrichtung (8) mobil angeordnet ist und/oder während des Einschubs der Rohrleitung (2) im Wesentlichen simultan mit der Rohrleitung (2) bewegt wird.

3. Verfahren nach Anspruch 1 oder 2, **dadurch gekennzeichnet, dass** die Rohrleitung (2) außerhalb des Bohrlochs (6) auf Rollenböcken (15) gelagert wird, und/oder dass ein Ende der Rohrleitung (2) elektrisch vom Boden (12) und/oder dem mit der Flüssigkeit (6) gefüllten Bohrloch (5) getrennt wird.

4. Verfahren nach einem der Ansprüche 1 bis 3, **dadurch gekennzeichnet, dass** die Überprüfung elektrisch durchgeführt wird.

5. Verfahren nach einem der Ansprüche 1 bis 4, **dadurch gekennzeichnet, dass** die Druck- oder Zugkraft der Vorschubeinrichtung (1) über Stege (16) an einem Innenrohr (13) der Isolationskupplung (3) auf ein druckfestes, jedoch elektrisch nicht leitfähiges Material (18) eingeleitet werden und von diesem druckfesten, jedoch elektrisch nicht leitfähigen Material (18) auf Stege (17) an einem Außenrohr (14) der Isolationskupplung (3) und von dort über das Außenrohr (14) der Isolationskupplung (3) weiter auf den Bohrkopf (4) übertragen werden und dass die Stege (16) des Innenrohrs (13) der Isolationskupplung (3) keine elektrisch leitfähige Verbindung zum Außenrohr (14) der Isolationskupplung (3) und die Stege (17) am Außenrohr (14) der Isolationskupplung (3) keine elektrisch leitfähige Verbindung zum Innenrohr (13) der Isolationskupplung (3) aufweisen.

6. Verfahren nach Anspruch 5, **dadurch gekennzeichnet, dass** als druckfestes, jedoch elektrisch nicht leitfähiges Material (18) Beton und/oder einen Kunststoff eingesetzt wird, mit dem die Druck- oder Zugkraft der Vorschubeinrichtung (1) auf den Bohrkopf (4) übertragen wird.

7. Isoiationskupplung zum Übertragen einer von einer Vorschubeinrichtung (1) erzeugten Druckkraft zum Einschub einer Rohrleitung (2) in ein mit einer Flüssigkeit (6) gefülltes Bohrloch (5), wobei die Druckkraft von der Vorschubeinrichtung (1) auf die Rohrleitung (2) aufgebracht wird, auf einen Bohrkopf (4), bei der die Isolationskupplung (3) ein Element (13) zum Anschließen der Rohrleitung (2) und eine Element (14) zum Anschließen des Bohrkopfs (4) aufweist, das Element (13) zum Anschließen der Rohrleitung (2) und das Element (14) zum Anschließen des Bohrkopfs (4) so miteinander verbunden sind, dass die Druckkraft von vom Element (13) zum Anschließen der Rohrleitung (2) auf das Element (14) zum Anschließen des Bohrkopfs (4) übertragbar ist, die Verbindung elektrisch nicht leitfähig ausgeführt ist, und Steuer- und Versorgungsleitungen (9) für den Bohrkopf (4) innerhalb der Isolationskupplung (3) so angeordnet sind, dass die Steuer- und Versorgungsleitungen (9) keinen elektrischen Kontakt zwischen Bohrkopf (4) und Boden (12) mit der Rohrleitung (2) bewirken, **dadurch gekennzeichnet, dass** das Element (13) zum Anschließen der Rohrleitung (2) wenigstens einen Steg (16, 17) aufweist, und das Element (14) zum Anschließen des Bohrkopfs (4) wenigstens einen Steg (16, 17) aufweist, dass die elektrisch nicht leitfähige Verbindung über ein elektrisch nicht leitfähiges Material (18) erfolgt, das druck- und zugfest ist, wobei das elektrisch nicht leitfähiges Material (18) zwischen den Stegen (16,17) Druckkraft übertragend wirkend angeordnet ist, und dass der wenigstens eine Steg (16) des Elements (13) zum Anschließen der Rohrleitung (2) keine elektrisch leitfähige Verbindung zum Element (14) zum Anschließen des Bohrkopfs (4) und der wenigstens eine Steg (17) am Element (14) zum Anschließen des Bohrkopfs (4) keine elektrisch leitfähige Verbindung zum Element (13) zum Anschließen der Rohrleitung (2) aufweist.

8. Isolationskupplung nach Anspruch 7, **dadurch gekennzeichnet, dass** das Element (13) zum Anschließen der Rohrleitung (2) ein Innenrohr (13) oder ein Außenrohr (14) ist, und/oder dass das Element (14) zum Anschließen des Bohrkopfs (4) ein Innenrohr (13) oder ein Außenrohr (14) ist.

9. Isolationskupplung nach Anspruch 7 oder 8, **dadurch gekennzeichnet**, das elektrisch nicht leitfähiges Material (18) Beton und/oder Kunststoff ist.

10. Isolationskupplung nach einem der Ansprüche 7 bis 9, **dadurch gekennzeichnet, dass** ein Innenrohr (10) vorgesehen ist, in dem die Steuer- und Versorgungsleitungen (9) für den Bohrkopf (4) angeordnet sind, wobei bevorzugt das Innenrohr (10) mittels wenigstens einer Zentrierung (11) in der Isolationskupplung (3) angeordnet ist, wobei das Innenrohr (10) und/oder die Zentrierungen (11) besonders bevorzugt aus einem isolierenden Material bestehen.

11. Isolationskupplung nach einem der Ansprüche 7 bis 10, **dadurch gekennzeichnet, dass** im Verbindungsbereich, bevorzugt innerhalb des Druckkraftübertragungsbereichs zwischen Innenrohr (13) und Außenrohr (14), mindestens eine Leitung für die Zufuhr von Flüssigkeit (19) in das Bohrlochs (5) zwischen Rohrleitung (2) und Bohrlochwand so installiert ist, dass keine elektrische Verbindung vom Innenrohr (13) zum Außenrohr (14) besteht.

12. Vorrichtung zur Überprüfung der Umhüllung einer Rohrleitung (2) während der Verlegung in ein mit Flüssigkeit (6) gefülltes Bohrloch (5) in einem Boden (12) über einen Bohrkopf (4), mit einer Vorschubeinrichtung (1), wobei die Vorschubeinrichtung (1) eine Druckkraft über eine Rohrleitung (2) auf den Bohrkopf (4) ausübt, mit einer elektrisch nicht leitfähigen Isolationskupplung (3), die zwischen der Rohrleitung (2) und dem Bohrkopf (4) angeordnet ist, so dass die Druckkraft der Vorschubvorrichtung (1) über die Rohrleitung (2) und die elektrisch nicht leitfähige Isolationskupplung (3) auf den Bohrkopf (4) übertragbar ist, und mit Steuer- und Versorgungsleitungen (9) für den Bohrkopf (4), die innerhalb der Rohrleitung (2) angeordnet sind, **dadurch gekennzeichnet, dass** die Isolationskupplung (3) nach einem der Ansprüche 7 bis 11 ausgeführt ist, dass die Steuer- und Versorgungsleitungen (9) für den Bohrkopf (4) innerhalb der Rohrleitung (2) so angeordnet sind, dass sie keinen elektrischen Kontakt zwischen Bohrkopf (4) und Boden (12) mit der Rohrleitung (2) ermöglichen, und dass während des Verlegevorgangs der Rohrleitung (2) eine Messapparatur (8) vorgesehen ist, mit der die Unversehrtheit der im Bohrloch (5) von der Flüssigkeit (6) umgebenen Umhüllung (7) der Rohrleitung (2) überprüfbar ist.

## Claims

1. Method for checking the coating of a pipeline (2) while being laid in a borehole (5) in a substrate (12), which borehole (5) is filled with liquid (6), an advancing device (1) exerting a compressive force on a drilling head (4) via a pipeline (2), **characterized in that** the compressive force is transmitted from the pipeline (2) to the drilling head (4) via an electrically non-conductive insulating coupling (3), **in that** control and supply lines (9) for the drilling head (4) are arranged within the pipeline (2) in such a way that, no electric contact is produced between the drilling head (4) and the substrate (12) by way of the pipeline (2) through the control and supply lines (9), and **in that**, during the laying operation of the pipeline (2), the integrity of the coating (7) of the pipeline (2) which coating (7) is surrounded by a liquid (6) in the borehole (5), is checked by a measuring apparatus (8).

2. Method according to Claim 1, **characterized in that** the measuring apparatus (8) is situated outside the borehole (5), and/or **in that** the measuring apparatus (8) is arranged in a mobile manner and/or, during the insertion of the pipeline (2), is moved substantially simultaneously with the pipeline (2).

3. Method according to Claim 1 or 2, **characterized in that** the pipeline (2) is mounted outside the borehole (6) on roller blocks (15), and/or **in that** one end of the pipeline (2) is isolated electrically from the substrate (12) and/or the borehole (5) which is filled with the liquid (6).

4. Method according to one of Claims 1 to 3, **characterized in that** the checking operation is carried out electrically.

5. Method according to one of Claims 1 to 4, **characterized in that** the compressive or tensile force of the advancing device (1) is introduced to a compression-resistant but electrically non-conductive material (18) via webs (16) on an inner pipe (13) of the insulating coupling (3), and are transmitted from the said compression-resistant but electrically non-conductive material (18) to webs (17) on an outer pipe (14) of the insulating coupling (3) and further, from there, to the drilling head (4) via the outer pipe (14) of the insulating coupling (3), and **in that** the webs (16) of the inner pipe (13) of the insulating coupling (3) do not have an electrically conductive connection to the outer pipe (14) of the insulating coupling (3) and the webs (17) on the outer pipe (14) of the insulating coupling (3) do not have an electrically conductive connection to the inner pipe (13) of the insulating coupling (3).

6. Method according to Claim 5, **characterized in that** concrete and/or a plastic is used as a compression-resistant but electrically non-conductive material (18), by way of which the compressive or tensile force of the advancing device (1) is transmitted to the drilling head (4).

7. Insulating coupling for transmitting a compressive force which is produced by an advancing device (1) for pushing a pipeline (2) into a borehole (5) which is filled with a liquid (6), the compressive force being applied by the advancing device (1) to the pipeline (2), to a drilling head (4), in which the insulating coupling (3) has an element (13) for connecting the pipeline (2) and an element (14) for connecting the drilling head (4), the element (13) for connecting the pipeline (2) and the element (14) for connecting the drilling head (4) being connected to one another in such a way that the compressive force can be transmitted from the element (13) for connecting the pipeline (2) to the element (14) for connecting the drilling head (4), the connection being of electrically non-conductive configuration, and control and supply lines (9) for the drilling head (4) being arranged within the insulating coupling (3) in such a way that the control and supply lines (9) do not bring about an electric contact between the drilling head (4) and the substrate (12) with the pipeline (2), **characterized in that** the element (13) for connecting the pipeline (2) has at least one web (16, 17), and the element (14) for connecting the drilling head (4) has at least one web (16, 17), **in that** the electrically non-conductive connection takes place via an electrically non-conductive material (18) which is compression-resistant and exhibits tensile strength, the electrically non-conductive material (18) being arranged actively so as to transmit compressive force between the webs (16, 17), and **in that** the at least one web (16) of the element (13) for connecting the pipeline (2) has no electrically conductive connection to the element (14) for connecting the drilling head (4), and the at least one web (17) on the element (14) for connecting the drilling head (4) has no electrically conductive connection to the element (13) for connecting the pipeline (2).

8. Insulating coupling according to Claim 7, **characterized in that** the element (13) for connecting the pipeline (2) is an inner pipe (13) or an outer pipe (14), and/or **in that** the element (14) for connecting the drilling head (4) is an inner pipe (13) or an outer pipe (14).

9. Insulating coupling according to Claim 7 or 8, **characterized in that** the electrically non-conductive material (18) is concrete and/or plastic.

10. Insulating coupling according to one of Claims 7 to 9, **characterized in that** an inner pipe (10) is provided, in which the control and supply lines (9) for the drilling head (4) are arranged, the inner pipe (10) preferably being arranged by means of at least one centring means (11) in the insulating coupling (3), the inner pipe (10) and/or the centring means (11) consisting particularly preferably of an insulating material.

11. Insulating coupling according to one of Claims 7 to 10, **characterized in that** at least one line for feeding liquid (19) into the borehole (5) between the pipeline (2) and the borehole wall is installed in the connecting region, preferably within the compressive-force transmission region between the inner pipe (13) and the outer pipe (14), in such a way that there is no electric connection from the inner pipe (13) to the outer pipe (14).

12. Apparatus for checking the coating of a pipeline (2) while being laid in a borehole (5) in a substrate (12), which borehole (5) is filled with liquid (6), via a drilling head (4), having an advancing device (1), the advancing device (1) exerting a compressive force on the drilling head (4) via a pipeline (2), having an electrically non-conductive insulating coupling (3) which is arranged between the pipeline (2) and the drilling head (4), with the result that the compressive force of the advancing device (1) can be transmitted to the drilling head (4) via the pipeline (2) and the electrically non-conductive insulating coupling (3), and having control and supply lines (9) for the drilling head (4) which are arranged within the pipeline (2), **characterized in that** the insulating coupling (3) is configured according to one of Claims 7 to 11, **in that** the control and supply lines (9) for the drilling head (4) are arranged within the pipeline (2) in such a way that they do not make an electric contact possible between the drilling head (4) and substrate (12) by way of the pipeline (2), and **in that**, during the laying operation of the pipeline (2), a measuring device (8) is provided, by way of which the integrity of the coating (7) of the pipeline (2) can be checked, which coating (7) is surrounded by the liquid (6) in the borehole (5).

## Revendications

1. Procédé pour contrôler l'enveloppe d'une conduite tubulaire (2) au cours de son insertion dans un trou de forage (5) rempli de liquide (6) dans un sol (12), un dispositif d'avance (1) exerçant une force de pression par le biais d'une conduite tubulaire (2) sur une tête de forage (4), **caractérisé en ce que** la force de pression est transmise par le biais d'un couplage isolant non électriquement conducteur (3) de la conduite tubulaire (2) à la tête de forage (4), **en ce que** des conduites de commande et d'alimentation (9) pour la tête de forage (4) sont disposées à l'intérieur de la conduite tubulaire (2) de telle sorte que, du fait des conduites de commande et d'alimentation (9), aucun contact électrique entre la tête de forage (4) et le sol (12) n'ait lieu avec la conduite tubulaire (2), et **en ce que**, pendant l'opération d'insertion de la conduite tubulaire (2), l'absence d'endommagement de l'enveloppe (7) de la conduite tubulaire (2) entourée dans le trou de forage (5) par un liquide (6) soit contrôlée par un dispositif de mesure (8).

2. Procédé selon la revendication 1, **caractérisé en ce que** le dispositif de mesure (8) se trouve en dehors du trou de forage (5) et/ou **en ce que** le dispositif de mesure (8) est disposé de manière mobile et/ou est essentiellement déplacé simultanément avec la conduite tubulaire (2) pendant l'enfoncement de la conduite tubulaire (2).

3. Procédé selon la revendication 1 ou 2, **caractérisé en ce que** la conduite tubulaire (2) est montée en dehors du trou de forage (5) sur des supports à rouleaux (15), et/ou **en ce qu'**une extrémité de la conduite tubulaire (2) est séparée électriquement du sol (12) et/ou du trou de forage (5) rempli de liquide (6).

4. Procédé selon l'une quelconque des revendications 1 à 3, **caractérisé en ce que** le contrôle s'effectue de manière électrique.

5. Procédé selon l'une quelconque des revendications 1 à 4, **caractérisé en ce que** la force de pression ou de traction du dispositif d'avance (1) est introduite par le biais d'entretoises (16) au niveau d'un tube interne (13) du couplage isolant (3) sur un matériau (18) résistant à la pression mais non électriquement conducteur, et est transmise par ce matériau (18) résistant à la pression mais non électriquement conducteur à des entretoises (17) au niveau d'un tube externe (14) du couplage isolant (3) et de là, par le biais du tube externe (14) du couplage isolant (3), à la tête de forage (4) et **en ce que** les entretoises (16) du tube interne (13) du couplage isolant (3) ne présentent aucune connexion électriquement conductrice avec le tube externe (14) du couplage isolant (3) et les entretoises (17) sur le tube externe (14) du couplage isolant (3) ne présentent aucune connexion électriquement conductrice avec le tube interne (13) du couplage isolant (3).

6. Procédé selon la revendication 5, **caractérisé en ce que** l'on utilise comme matériau (18) résistant à la pression mais non électriquement conducteur du béton et/ou un plastique, avec lequel la force de pression ou de traction du dispositif d'avance (1) est transmise à la tête de forage (4).

7. Couplage isolant pour le transfert à une tête de forage (4) d'une force de pression produite par un dispositif d'avance (1) pour l'enfoncement d'une conduite tubulaire (2) dans un trou de forage (5) rempli d'un liquide (6), la force de pression étant appliquée par le dispositif d'avance (1) à la conduite tubulaire (2), le couplage isolant (3) présentant un élément (13) pour le raccord de la conduite tubulaire (2) et un élément (14) pour le raccord de la tête de forage (4), l'élément (13) pour le raccord de la conduite tubulaire (2) et l'élément (14) pour le raccord de la tête de forage (4) étant connectés l'un à l'autre de telle sorte que la force de pression puisse être transmise de l'élément (13) pour le raccord de la conduite tubulaire (2) à l'élément (14) pour le raccord de la tête de forage (4), la connexion étant réalisée de manière non électriquement conductrice, et des conduites de commande et d'alimentation (9) pour la tête de forage (4) étant disposées à l'intérieur du couplage isolant (3) de telle sorte que les conduites de commande et d'alimentation (9) ne créent aucun contact électrique entre la tête de forage (4) et le sol (12) avec la conduite tubulaire (2), **caractérisé en ce que** l'élément (13) pour le raccord de la conduite tubulaire (2) présente au moins une entretoise (16, 17) et l'élément (14) pour le raccord de la tête de forage (4) présente au moins une entretoise (16, 17), **en ce que** la connexion non électriquement conductrice a lieu par le biais d'un matériau (18) non électriquement conducteur qui est résistant à la pression et à la traction, le matériau (18) non électriquement conducteur étant disposé entre les entretoises (16, 17) en transmettant activement la force de pression, et **en ce que** l'au moins une entretoise (16) de l'élément (13) pour le raccord de la conduite tubulaire (2) ne présente pas de connexion électriquement conductrice avec l'élément (14) pour le raccord de la tête de forage (4) et l'au moins une entretoise (17) sur l'élément (14) pour le raccord de la tête de forage (4) ne présente pas de connexion électriquement conductrice avec l'élément (13) pour le raccord de la conduite tubulaire (2).

8. Couplage isolant selon la revendication 7, **caractérisé en ce que** l'élément (13) pour le raccord de la conduite tubulaire (2) est un tube interne (13) ou un tube externe (14), et/ou **en ce que** l'élément (14) pour le raccord de la tête de forage (4) est un tube interne (13) ou un tube externe (14).

9. Couplage isolant selon la revendication 7 ou 8, **caractérisé en ce que** le matériau (18) non électriquement conducteur est du béton et/ou du plastique.

10. Couplage isolant selon l'une quelconque des revendications 7 à 9, **caractérisé en ce qu'**il est prévu un tube interne (10) dans lequel sont disposées les conduites de commande et d'alimentation (9) pour la tête de forage (4), le tube interne (10) étant de préférence disposé au moyen d'au moins un centrage (11) dans le couplage isolant (3), le tube interne (10) et/ou les centrages (11) se composant de manière particulièrement préférable d'un matériau isolant.

11. Couplage isolant selon l'une quelconque des revendications 7 à 10, **caractérisé en ce que**, dans la région de connexion, de préférence à l'intérieur de la région de transfert de la force de pression entre le tube interne (13) et le tube externe (14), est installée au moins une conduite pour l'alimentation en liquide (19) dans le trou de forage (5) entre la conduite tubulaire (2) et la paroi du trou de forage, de telle sorte qu'aucune connexion électrique n'existe entre le tube interne (13) et le tube externe (14).

12. Dispositif pour contrôler l'enveloppe d'une conduite tubulaire (2) au cours de son insertion dans un trou de forage (5) rempli de liquide (6) dans un sol (12) par le biais d'une tête de forage (4), comprenant un dispositif d'avance (1), le dispositif d'avance (1) exerçant une force de pression par le biais d'une conduite tubulaire (2) sur la tête de forage (4), un couplage isolant (3) non électriquement conducteur, qui est disposé entre la conduite tubulaire (2) et la tête de forage (4), de telle sorte que la force de pression du dispositif d'avance (1) puisse être transmise par le biais de la conduite tubulaire (2) et du couplage isolant non électriquement conducteur (3) à la tête de forage (4), et des conduites de commande et d'alimentation (9) pour la tête de forage (4), qui sont disposées à l'intérieur de la conduite tubulaire (2), **caractérisé en ce que** le couplage isolant (3) est réalisé selon l'une quelconque des revendications 7 à 11, **en ce que** les conduites de commande et d'alimentation (9) pour la tête de forage (4) sont disposées à l'intérieur de la conduite tubulaire (2) de telle sorte qu'elles ne permettent aucun contact électrique entre la tête de forage (4) et le sol (12) avec la conduite tubulaire (2), et **en ce que**, pendant l'opération d'insertion de la conduite tubulaire (2), un appareil de mesure (8) est prévu, avec lequel l'absence d'endommagement de l'enveloppe (7) de la conduite tubulaire (2) entourée dans le trou de forage (5) par un liquide (6) peut être contrôlée.
